(19)

**Europäisches Patentamt**
**European Patent Office**
**Office européen des brevets**

(11) **EP 2 104 249 B1**

(12) **EUROPEAN PATENT SPECIFICATION**

(45) Date of publication and mention
of the grant of the patent:
**02.07.2014 Bulletin 2014/27**

(51) Int Cl.:
**H04B 10/2513** *(2013.01)*    **H04B 10/29** *(2013.01)*

(21) Application number: **06828422.3**

(22) Date of filing: **21.12.2006**

(86) International application number:
**PCT/CN2006/003528**

(87) International publication number:
**WO 2008/074193 (26.06.2008 Gazette 2008/26)**

(54) **A SELF ADAPTING DISPERSION COMPENSATION SYSTEM AND METHOD FOR OPTICAL COMMUNICATION NETWORK**

SELBSTANPASSENDES DISPERSIONSKOMPENSATIONSSYSTEM UND VERFAHREN FÜR EIN OPTISCHES KOMMUNIKATIONSNETZ

SYSTÈME DE COMPENSATION DE DISPERSION À ADAPTATION AUTOMATIQUE ET PROCÉDÉ POUR UN RÉSEAU DE COMMUNICATION OPTIQUE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**23.09.2009 Bulletin 2009/39**

(73) Proprietor: **ZTE Corporation**
**Shenzhen, Guangdong 518057 (CN)**

(72) Inventor: **SHU, Huade**
**Guangdong 518057 (CN)**

(74) Representative: **Hatzmann, Martin et al**
**V.O.**
**Johan de Wittlaan 7**
**2517 JR Den Haag (NL)**

(56) References cited:
**EP-A2- 1 580 906        EP-A2- 1 628 417**
**WO-A1-2004/004171     CN-A- 1 432 229**
**CN-A- 1 433 601         JP-A- 2005 252 601**
**US-A1- 2001 048 539    US-A1- 2003 039 013**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to optical transmission technology, in particular to an adaptive dispersion compensation system and a method used in optical communication network.

**Background of the Invention**

With the rapid development of the optical communication technology, the optical communication system develops along the trends of high speed, large capacity, long distance and intelligence and so on. At present, 160 channels dense wavelength division multiplexing (DWDM) optical communication system with 10 Gb/s speed per channel has been commercialized, and the automatically switched optical network (ASON) system based on intelligent circuit switching has also been commercialized. The optical network systems with larger capacity and higher speed (40 Gb/s and above) will appear in the future. In the meanwhile, the intelligent optical network system with optical cross function or optical-add drop multiplexing function will also appear.

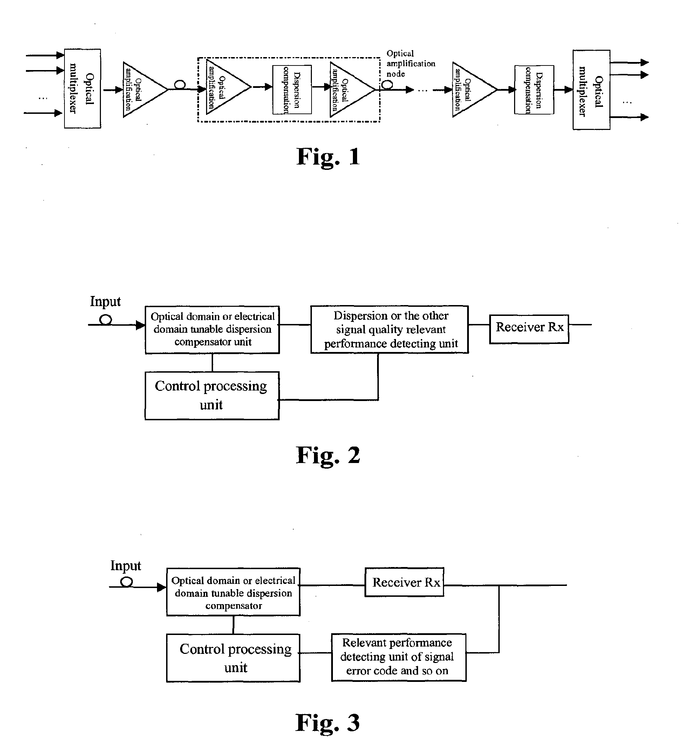

In super-high speed optical transmission system, the dispersion and polarization mode dispersion will result in the deterioration of the quality of optical signals, and can decrease the transmission distance. In order to increase the transmission distance of the optical transmission system, measures need to be taken to compensate the dispersion and the polarization mode dispersion. In the traditional optical communication system, a fixed dispersion compensator is used to compensate the dispersion on lines as shown in Fig. 1. By means of dispersion compensation, the residual dispersion of the optical signal at the receiving side is ensured to be controlled within the tolerable range of a receiver. Generally, a dispersion compensation optical fiber module is used as the dispersion compensator.

For the long-distance optical transmission system, the factors such as temperature, pressure and so on can result in the subtle change of the line optical fiber dispersion coefficient, and therefore the real-time change of the dispersion value of the light signal in the optical path will be accumulated continuously with the increase of the total transmission distance, which may result in the signal residual dispersion at receiving side exceeds the tolerable range, and consequently the error performance of the system will be deteriorated.

With the increase of the single channel speed, the dispersion tolerance of the light source is consequently decreased. For 10Gb/s optical signal without pre-chirp, the dispersion tolerance value is about 1000ps/nm; while for the 40Gb/s optical signal without pre-chirp, the dispersion tolerance value is about 40ps/nm, which only equals to 2km transmission distance of G.652 optical fiber within 1550nm wavelength window. Therefore, for the 40Gb/s system, since the dispersion accommodation value of the light source is small, the subtle change of the line optical fiber dispersion value may possibly cause that the signal residual dispersion at receiving side exceeds the tolerable range, and the system error code performance will be deteriorated accordingly. As described above, the influence to the performance of 40Gb/s system due to the change of the optical fiber dispersion is particularly obvious.

On the other hand, with the intellectualized development of the optical network, the reconfigurable optical add/drop multiplexing, even the optical cross-connect node will be brought into the optical network. The dynamic add/drop multiplexing and the dynamic cross-connect of the optical signals among the optical network nodes will bring the change of the dispersion value of the optical signal in optical path, which may cause the signal residual dispersion at receiving side exceed the tolerable range, and the system error code performance will be deteriorated accordingly.

In a word, the factors show that with the optical network develops towards the directions of high speed, long distance and intelligence, since the change of the dispersion values of lines and the optical network nodes, the signal residual dispersion value at the receiving side is caused to change continuously after the optical signals are transmitted in the lines. The adaptive dispersion compensation is necessary for the signals with continuously changeable residual dispersion values. How to realize the adaptive compensation is one of the key issues in the technical field.

It is noted that patent publication WO 2004/004171 A1 discloses a system and method for dynamic compensations in which one or more spectral components within the electrical spectrum of the received data signals is used for adjusting the dispersion of the received signals to provide a dispersion compensated signal.

EP 1628417 discloses a method for chromatic dispersion compensation by controlling a plurality of variable chromatic dispersion compensators arbitrarily disposed in a photonic network.

The dispersion adjusting unit of the adaptive dispersion compensation system can be accomplished by using a tunable dispersion compensator. The dispersion compensation function of the tunable dispersion compensator can be realized in optical domain and also can be realized in electrical domain. The methods to realize the tunable dispersion compensation in optical domain are many, including various methods by using chirped fiber Bragg grating technology, interference technology based on Gires-Tournois etalon and multistage dispersion compensation module connected in series and so on. The methods to realize the tunable dispersion compensation in electrical domain are also many. After being processed by photoelectric conversion and linear amplification, the optical signal is sent to an equalization circuit.

The performances of an equalizer are fed back through detecting the quality of equalized electrical signals and using some a control strategy to realize the adaptive dispersion compensation. The equalization circuit used by the dispersion compensation in electrical domain can be FFE (Feed-forward equalizer), DFE (Decision Feedback Equalizer), FDTS (Fixed Delay Tree Search) ,or MLSE (Maximum Likihood Sequence Estimation) and so on, or the combination of the pluralities of methods.

By detecting the signal quality of the residual dispersion or relevant with the dispersion in the front of the receiver, such as Q factor and so on (as shown in Fig. 2), or by detecting the relevant signal performance at the back of the receiver, such as bit error rate and so on (as shown in Fig. 3), the adaptive dispersion compensation can be realized by feeding back and controlling the signals.

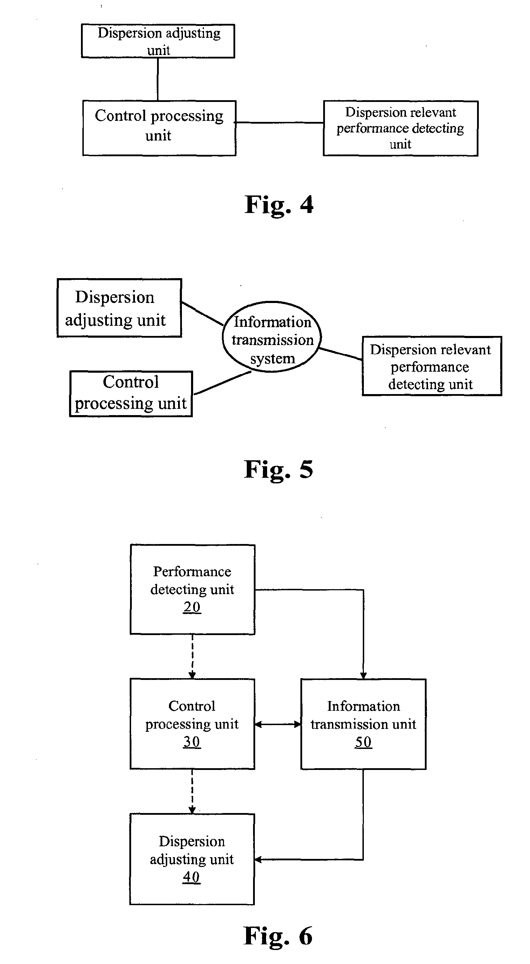

In terms of functional module, the adaptive dispersion compensation function consists of three parts: a performance detecting unit, a control processing unit and a dispersion adjusting unit which are relevant with the dispersion, as shown in Fig. 4. Many methods can be used to realize the adaptive dispersion compensation, but mainly realized at one node. For the dynamic optical network, the above three units can be located at different nodes. When the three units are located at different nodes, in order to realize the performance of adaptive dispersion compensation, relevant information needs to be transmitted effectively among different nodes.

A method of interacting information between the performance detecting unit and the control processing unit through a signaling system is described in relevant technology, and is used to realize the adaptive dispersion compensation. As shown in Fig. 5, the performance detecting unit, the control processing unit and the dispersion adjusting unit are not located at a same node.

To sum up, in order to improve the dynamic and intellectualized development of the optical network, the performance detecting unit, the control processing unit and the dispersion adjusting unit which are relevant with the adaptive compensation system can be located at different nodes. Therefore, relevant information needs to be transmitted effectively among different nodes.

Fig. 1 is the diagram of the traditional optical communication system dispersion compensation method. At optical terminal state, the dispersion compensation fiber module is usually used after the wave is combined and before the wave is dispersed to compensate the dispersion of the multichannel optical signal of a DWDM system. At optical relay station, two-stage optical amplifiers are usually used, and the dispersion compensation fiber module is arranged between the two-stage amplifiers to realize multichannel dispersion compensation.

For the 40Gb/s system and above, 10Gb/s super-long system and dispersion dynamic change system, adaptive dispersion compensation technology is necessary to be used. The tunable dispersion compensation of the system consists of the optical domain dispersion compensation and the electrical domain dispersion compensation. In Fig. 2, by detecting the signal quality of the residual dispersion or relevant with the dispersion in the front of the receiver, such as the Q factor and so on, the adaptive dispersion compensation function is realized by feeding back the signals and controlling the tunable dispersion compensator in optical domain or electrical domain. In Fig. 3, by detecting the relevant signal performance at the back of the receiver, such as the error code rate and so on, the adaptive dispersion compensation function is realized by feeding back the signals and controlling the tunable dispersion compensator in optical domain or electrical domain.

Fig. 4 is the functional module diagram with various of adaptive dispersion compensation functions, consisting of three parts: the performance detecting unit, the control processing unit and the dispersion adjusting unit which are relevant with the dispersion. The diagram is suitable for the adaptive dispersion compensation module which can be realized at one node.

For the dynamic optical network, the three units can be located at different nodes. When the three units are located at different nodes, in order to realize the performance of the adaptive dispersion compensation, relevant information needs to be transmitted effectively among different nodes.

**Summary of the Present Invention**

The present invention mainly aims at providing an adaptive dispersion compensation system and a method used in optical communication network to overcome the defect in prior art that each part of the adaptive dispersion compensator is required to be arranged at the same node.

In order to realize the aim, according to the first aspect of the present invention, the present invention provides an adaptive dispersion compensation system used in optical communication network. The adaptive dispersion compensation system comprises at least one performance detecting unit, for detecting relevant performances of the dispersion; at least one control processing unit, for generating control information according to the detected information from the at least one performance detecting unit; at least one dispersion adjusting unit, for compensating dispersion according to the control information from the at least one control processing unit; and an information transmission unit, which is connected among at least one performance detecting unit, at least one control processing unit and at least one dispersion adjusting unit which are arranged at different nodes, the information transmission unit is used for transmitting the detected information from at least one performance detecting unit to at least one control processing unit which is arranged at a different node, and is used for transmitting the control information from at least one control processing unit to at least one dispersion adjusting unit which is arranged at a different node.

The dispersion adjusting unit can be a tunable dispersion compensator, comprising the tunable dispersion compensator using CFBG (Chirped Fiber Bragg Grating), or the tunable dispersion compensator using G-T etalon interference technology, or the tunable dispersion compensator using microelectronic mechanical system technology, or the tunable dispersion compensator using PLC ring-shaped resonant cavity technology, or the device using multistage fixed dispersion compensator cascade connection technology and using different dispersion compensation value control technology through an optical switch.

The dispersion adjusting unit can be a tunable dispersion transmitter. The dispersion adjusting unit can be a tunable dispersion receiver.

The dispersion adjusting unit can be a tunable dispersion compensation receiver, comprising an electric domain tunable dispersion compensation receiver, or an optical domain tunable dispersion compensation receiver or the combination of the two.

Alternatively, one of at least one performance detecting unit, one of at least one control processing unit corresponding to the performance detecting unit, and one of at least one dispersion adjusting unit corresponding to the performance detecting unit are arranged respectively at different nodes. The detected information between the performance detecting unit and the control processing unit is transmitted by the information transmission unit. The control information between the control processing unit and the dispersion adjusting unit is transmitted by the information transmission unit.

Alternatively, one of at least one dispersion adjusting unit and one of at least one control processing unit corresponding to the dispersion adjusting unit are arranged at the same node. One of at least one performance detecting unit corresponding to the dispersion adjusting unit is arranged at a different node. The detected information between the performance detecting unit and the control processing unit is transmitted by the information transmission unit. The control information of the control processing unit is directly transmitted to the dispersion adjusting unit.

Alternatively, one of at least one performance detecting unit and one of at least one control processing unit corresponding to the performance detecting unit are arranged at the same node. One of at least one dispersion adjusting unit corresponding to the performance detecting unit is arranged at a different node. The detected information of the performance detecting unit is directly transmitted to the control processing unit. The control information between the control processing unit and the dispersion adjusting unit is transmitted by the information transmission unit.

Alternatively, a plurality of performance detecting units, a plurality of control processing units corresponding to the performance detecting units, and a plurality of dispersion adjusting units corresponding to the performance detecting units are respectively arranged at different nodes. The detected information between the plurality of performance detecting units and the plurality of control processing units corresponding to the performance detecting units respectively is transmitted by the information transmission unit. The control information between the plurality of the control processing unit and the plurality of dispersion adjusting units corresponding to the control processing unit respectively is transmitted by the information transmission unit.

Alternatively, both a plurality of performance detecting units, and a plurality of dispersion adjusting units corresponding to the performance detecting units correspond to one of at least one control processing unit and are intensively controlled by a control processing unit.

Alternatively, the information transmission unit realizes in-band information transmission through the overhead inside the optical path which needs to be compensated. Alternatively, the information transmission unit realizes information transmission through the public optical path irrelevant to the optical path which needs to be compensated. Alternatively, the information transmission unit realizes information transmission through the combination of the two paths: the overhead inside the optical path which needs to be compensated, and the public optical path irrelevant to the optical path which needs to be compensated.

The detected information can be the dispersion change information of the optical path which needs to be compensated over the whole optical transmission link.

The adaptive dispersion compensation system can be suitable for single channel or multichannel.

In order to achieve the aim, according to the second aspect of the present invention, the present invention provides a adaptive dispersion compensation method used in optical communication network. The adaptive dispersion compensation method comprises the following steps:

Detecting step for generating detected information through the dispersion relevant performances detected by at least one performance detecting unit;

Detected information transmission step for transmitting the detected information to at least one control processing unit;

Processing step for generating control information by at least one control processing unit according to the detected information;

Control information transmission step for transmitting the control information to at least one dispersion adjusting unit;

Compensation step for compensating the dispersion by at least one dispersion adjusting unit according to the control information..

Wherein, at the detected information transmission step and the control information transmission step, the information transmission unit is used to transmit the detected information from at least one performance detecting unit to at least one control processing unit which is arranged at a different node, and is used to transmit the control information from at least one control processing unit to at least one dispersion adjusting unit which is arranged at a different node.

At the compensation step, the tunable dispersion compensator can be used as the dispersion adjusting unit to compensate the dispersion.

Alternatively, at the detected information transmission step and the control information transmission step, the information transmission unit realizes in-band information transmission through the overhead inside the optical path which needs to be compensated. Alternatively, at the detected information transmission step and the control information transmission step, the information transmission unit realizes information transmission through the public optical path irrelevant to the optical path which needs to be compensated. Alternatively, at the detected information transmission step and the control information transmission step, the information transmission unit realizes information transmission through the combination of the two paths: overhead inside the optical path which needs to be compensated and the public optical path irrelevant to the optical path which needs to be compensated.

The detected information can be the dispersion change information of the optical path which needs to be compensated over the whole optical transmission link. The detected information can be the signal error code rate or signal Q factor or the information which reflects signal quality of the optical path which needs to be compensated at the receiving side of the optical transmission link.

The adaptive dispersion compensation method is suitable for the single channel system or multi-path system.The present invention can realize the adaptive dispersion compensation for the multi-path or the single channel system by using the technical proposal under the circumstance that the performance detecting unit, the control processing unit and the dispersion adjusting unit which are relevant to the adaptive dispersion compensation are arranged at different nodes.

**Brief Description of the Drawings**

The drawings in the specification provide a further understanding to the present invention and constitute a part of the application. The exemplary embodiments of the present invention and the explanation thereof are given thereafter by way of illustration only, and thus are not limitative of the present invention, and wherein:

Fig.1 is a schematic view of a dispersion compensation method in traditional optical communication system;

Fig.2 is a principle diagram of the adaptive dispersion compensation;

Fig.3 is a principle diagram of another adaptive dispersion compensation;

Fig.4 is a logic diagram of adaptive dispersion compensation;

Fig. 5 is a functional diagram of realizing adaptive dispersion compensation jointly through multiple nodes according to an embodiment of the present invention;

Fig.6 is a diagram of a adaptive dispersion compensation system used in optical communication network according to the present invention;

Fig.7 is a flow chart of a adaptive dispersion compensation method used in optical communication network according to the present invention;

Fig.8 is a functional diagram of realizing adaptive dispersion compensation jointly through multiple nodes according to an another embodiment of the present invention;

Fig.9 is a functional diagram of realizing adaptive dispersion compensation jointly through multiple nodes according

**EP 2 104 249 B1**

to a yet another embodiment of the present invention;

Fig.10 is a functional diagram of realizing multi-path adaptive dispersion compensation jointly through a plurality of node according to an another embodiment of the present invention;

Fig.11 is a functional diagram of realizing multi-path adaptive dispersion compensation jointly through a plurality of nodes according to an a yet another embodiment of the present invention;

**Detailed Description**

The present invention will be detailed hereinafter and reference will be made to the drawings.

With reference to Fig.6, the adaptive dispersion compensation system 10 used in optical communication network according to the present invention comprises: at least one performance detecting unit 20, for detecting dispersion relevant performances; at least one control processing unit, for generating the control information based on the detected information from at least one performance detecting unit 20; at least one dispersion adjusting unit 40, for compensating dispersion based on the control information from at least one control processing unit 30; and an information transmission unit 50, which is connected among at least one performance detecting unit 20, at least one control processing unit 30 and at least one dispersion adjusting unit 40 which are arranged at different nodes, the information transmission unit is used for transmitting the detected information from at least one performance detecting unit 20 to at least one control processing unit 30 which is arranged at a different node, and is used for transmitting the control information from at least one control processing unit 30 to at least one dispersion adjusting unit 40 which is arranged at a different node.

The dispersion adjusting unit 40 can be an tunable dispersion compensator, comprising the tunable dispersion compensator using CFBG (Chirped Fiber Bragg Grating), or the tunable dispersion compensator using G-T etalon interference technology, or the tunable dispersion compensator using microelectronic mechanical system technology, or the tunable dispersion compensator using PLC ring-shaped resonant cavity technology, or the device using multistage fixed dispersion compensator cascade connection technology and using different dispersion compensation value control technology through an optical switch.

The dispersion adjusting unit 40 can be a tunable dispersion transmitter.

The dispersion adjusting unit 40 can be a tunable dispersion receiver.

The dispersion adjusting unit 40 can be a tunable dispersion compensation receiver which can be an electric domain tunable dispersion compensation receiver, or an optical domain tunable dispersion compensation receiver or the combination of both.

Alternatively, one of at least one performance detecting unit 20, one of at least one control processing unit 30 corresponding to the performance detecting unit, and one of at least one dispersion adjusting unit 40 corresponding to the performance detecting unit are arranged respectively at different nodes. The detected information between the performance detecting unit 20 and the control processing unit 30 is transmitted by the information transmission unit 50. The control information between the control processing unit 30 and the dispersion adjusting unit 40 is transmitted by the information transmission unit 50.

Alternatively, one of at least one dispersion adjusting unit 40 and one of at least one control processing unit 30 corresponding to the dispersion adjusting unit are arranged at the same node. One of at least one performance detecting unit 20 corresponding to the dispersion adjusting unit is arranged at a different node. The detected information between the performance detecting unit 20 and the control processing unit 30 is transmitted by the information transmission unit 50. The control information of the control processing unit 30 is directly transmitted to the dispersion adjusting unit 40.

Alternatively, one of at least one performance detecting unit 20 and one of at least one control processing unit 30 corresponding to the performance detecting unit are arranged at the same node. One of at least one dispersion adjusting unit 40 corresponding to the performance detecting unit is arranged at a different node. The detected information of the performance detecting unit 20 is directly transmitted to the control processing unit 30. The control information between the control processing unit 30 and the dispersion adjusting unit 40 is transmitted by the information transmission unit 50.

Alternatively, a plurality of performance detecting units 20, a plurality of control processing units 30 corresponding to the performance detecting unit, and a plurality of dispersion adjusting units 40 corresponding to the performance detecting unit are respectively arranged at different nodes. The detected information between the plurality of performance detecting units 20 and the plurality of control processing units 30 corresponding to the performance detecting unit respectively is transmitted by the information transmission unit 50. The control information between the plurality of control processing units 30 and the plurality of dispersion adjusting units 40 corresponding to the control processing unit respectively is transmitted by the information transmission unit 50.

Alternatively, both a plurality of performance detecting units 20 and a plurality of dispersion adjusting units 40

6

corresponding to the performance detecting units correspond to one of at least one control processing unit 30 and are intensively controlled by a control processing unit 30.

Alternatively, the information transmission unit 50 realizes in-band information transmission through the overhead inside the optical path which needs to be compensated. Alternatively, the information transmission unit 50 realizes information transmission through the public optical path irrelevant to the optical path which needs to be compensated. Alternatively, the information transmission unit 50 realizes information transmission through the combination of the two paths: the overhead inside the optical path which needs to be compensated, and the public optical path irrelevant to the optical path which needs to be compensated.

The detected information can be the dispersion change information of the optical path which needs to be compensated over the whole optical transmission link.

The adaptive dispersion compensation system can be suitable for single channel or multichannel.

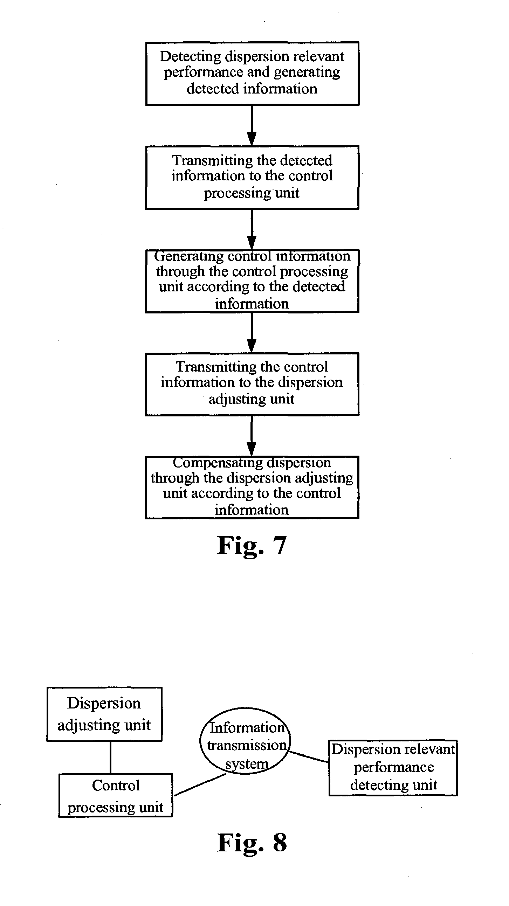

With reference to Fig.7, the adaptive dispersion compensation method used in optical communication network according to the present invention comprises the following steps:

Detecting step for generating the detected information through the dispersion relevant performances detected by at least one performance detecting unit;

Detected information transmission step for transmitting the detected information to at least one control processing unit;

Processing step for generating control information by at least one control processing unit according to the detected information;

Control information transmission step for transmitting the control information to at least one dispersion adjusting unit;

Compensation step for compensating the dispersion by at least one dispersion adjusting unit according to the control information.

Wherein, at the detected information transmission step and the control information transmission step, the information transmission unit is used to transmit the detected information from at least one performance detecting unit to at least one control processing unit which is arranged at a different node, and is used to transmit the control information from at least one control processing unit to at least one dispersion adjusting unit which is arranged at a different node.

At the compensation step, the tunable dispersion compensator can be used as the dispersion adjusting unit to compensate the dispersion.

Alternatively, at the detected information transmission step and the control information transmission step, the information transmission unit realizes in-band information transmission through the overhead inside the optical path which needs to be compensated. Alternatively, at the detected information transmission step and the control information transmission step, the information transmission unit realizes information transmission through the public optical path irrelevant to the optical path which needs to be compensated. Alternatively, at the detected information transmission step and the control information transmission step, the information transmission unit realizes information transmission through the combination of the two paths: the overhead inside the optical path which needs to be compensated and the public optical path irrelevant to the optical path which needs to be compensated. The detected information can be the dispersion change information of the optical path which needs to be compensated over the whole optical transmission link.

The detected information can be the signal error code rate or signal Q factor or the information which reflects signal quality of the optical path which needs to be compensated at the receiving side of the optical transmission link.

The adaptive dispersion compensation method is suitable for the single channel system or multichannel system.

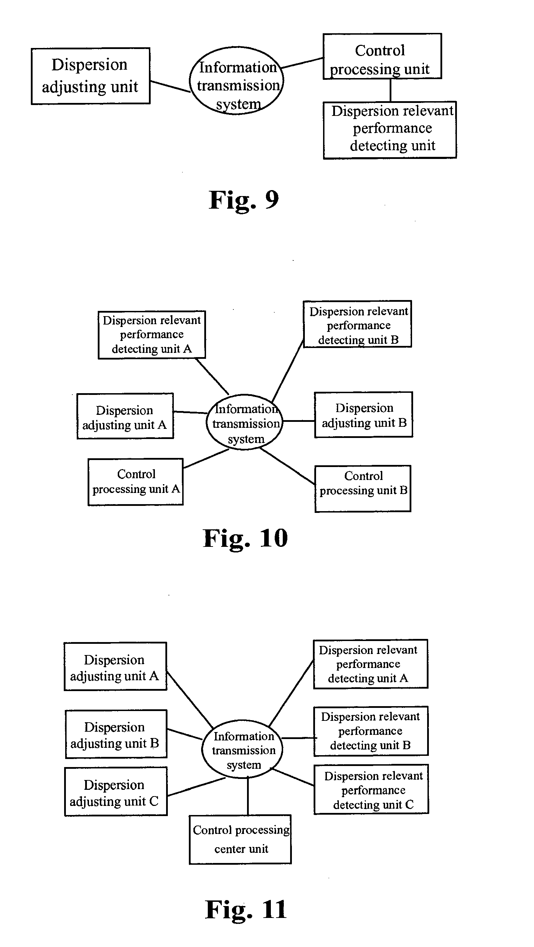

The present invention relates to a dispersion compensation method used in optical transmission system, more particularly, relates to an apparatus and a method which realize adaptive dispersion compensation. The present invention provides a adaptive dispersion compensation method and an apparatus which can compensate system dispersion for the intellectualized optical network in a distributed way. The technical solution of the present invention can refer to Fir. 5 to Fig. 11. The present invention comprises the following steps:

(1) The apparatus comprises the performance detecting unit, the control processing unit, the dispersion adjusting unit and the information transmission unit;

(2) The single channel or multichannel dispersion compensation can be realized by tunable dispersion compensator;

(3) The control processing unit can adopt a certain strategy to control the dispersion compensation performance of the tunable dispersion compensator according to the obtained dispersion relevant information.

(4) The information transmission unit is used for real-time transmitting the changes of the dispersion of each path and line or the dispersion of optical network nodes, and/or the information between the control unit and the dispersion adjusting unit.

The core content of the present invention is that the information transmission system which shares a same optical path or has independent path is used to transmit the detected or control information relevant to dispersion compensation to realize the adaptive dispersion compensation.

Fig.5 to Fig.11 are some embodiment of the present invention, which can be applied in single channel system and multichannel system.

In Fig.5, the information among the performance detecting unit, the control processing unit and the dispersion adjusting unit which are arranged at different nodes is transmitted by the information transmission system. In Fig.8, the control processing unit and the dispersion adjusting unit are arranged at the same node, and the performance detecting unit is arranged at another node. The dispersion relevant performance detected information is transmitted to the control processing unit by the information transmission system.

In Fig.9, the control processing unit and the performance detecting unit are arranged at the same node, and the dispersion adjusting unit is arranged at another node. The dispersion relevant control information is transmitted from the control processing unit to the dispersion adjusting unit. Fig.10 is an example of independent control processing unit. A plurality of control processing units and a plurality of performance detecting units are arranged at the same node and a plurality of dispersion adjusting units are arranged at different nodes. The dispersion relevant detected and control information is transmitted among respective control processing unit, performance detecting unit and dispersion adjusting unit by the information transmission system. Fig.11 is an illustrative diagram of a centralized control processing unit.

When the topology of the optical path changes or the dispersion index of some part on path or some part of the subsystem changes, the dispersion relevant information will be transmitted and the relevant information will be transmitted to the control unit. According to a certain strategy, the control unit can calculate the dispersion value which the tunable dispersion compensator needs to set. The relevant information is transmitted to the dispersion adjusting unit to realize the dispersion adaptive regulation.

The dispersion compensation of the tunable dispersion compensator can be realized by many strategies. The simplest strategy is to adjust the dispersion compensation value of the dispersion compensator, ensuring that the residual dispersion value $C_{residual}$ after the dispersion is compensated is controlled within a certain range of $C_{min}$ - $C_{max}$.

$$C_{residual} = C_{Tx} - C_{adj} - \sum_i C_{Li} - \sum_i C_{NLi} - \sum_j C_{ONj}$$

$$C_{min} \leq C_{residual} \leq C_{max}$$

The information transmission system can be realized in many ways, and the basic function thereof is to realize the relevant information transmission among the nodes. The physical path of the information transmission system can utilize some overhead inside the optical path which need to be compensated to build an in-band information transmission path, and can also utilize the public optical path which is irrelevant to the optical path which needs to be compensated. The information transmission among different nodes can be realized by mature communication protocol and also can be realized by private protocol or method.

Such as for long-distance 40Gb/s SDH system, the DCM with fixed dispersion value can be utilized to make coarse dispersion compensation, and the adaptive dispersion compensation system is utilized to compensate the residual dispersion. For the adaptive dispersion compensator used in long-distance 40Gb/s SDH system, the dispersion detecting unit thereof is arranged at the receiving side, and the dispersion adjusting unit and the control unit thereof are arranged at the transmitting side or at the receiving side. When the dispersion adjusting unit is arranged at the transmitting side, the control information needs to be transmitted from the receiving side to the transmitting side. STM-256 or the unused overhead bytes of OTU3 can be utilized to transmit dispersion compensation relevant control information.

For the WDM optical transmission system, the optical supervisory path can be utilized as the physical path. Relevant communication protocol can be utilized to realize the transmission of dispersion relevant information.

The descriptions above are only preferable embodiments of the present invention, which are not used to restrict the present invention. For those skilled in the art, the present invention may have various changes and variations. Any amendments, equivalent substitutions, improvements etc. within the principle of the present invention are all concluded in the scope of protection of the present invention, as defined by the claims.

**Claims**

1. An adaptive dispersion compensation system for optical communication network, **characterized in that** the system comprises:

   at least one performance detecting unit (20) for detecting a dispersion relevant performance;
   at least one control processing unit (30) for generating control information according to the detected information from the at least one performance detecting unit;
   at least one dispersion adjusting unit (40) for compensating dispersion according to the control information from the at least one control processing unit; and
   an information transmission unit (50) connected among the at least one performance detecting unit, the at least one control processing unit and the at least one dispersion adjusting unit which are located at different nodes, for transmitting the detected information from the at least one performance detecting unit to the at least one control processing unit located at a different node, and for transmitting the control information from the at least one control processing unit to the at least one dispersion adjusting unit located at a different node.

2. The adaptive dispersion compensation system according to claim 1, wherein the at least one dispersion adjusting unit (40) is a tunable dispersion compensator which can be the one employing Chirped Fiber Bragg Grating, or the one employing G-T etalon interference technology, or the one employing microelectronic mechanical system technology, or the one employing PLC ring-shaped resonant cavity technology, or the device employing multistage fixed dispersion compensators in cascade connection and as well as the technology accomplishing different dispersion compensation values by the control of an optical switch.

3. The adaptive dispersion compensation system according to claim 1, wherein the at least one dispersion adjusting unit (40) is a transmitter capable of accommodating dispersion.

4. The adaptive dispersion compensation system according to claim 1, wherein the at least one dispersion adjusting unit (40) is a receiver capable of adjusting dispersion.

5. The adaptive dispersion compensation system according to claim 1, wherein the at least one dispersion adjusting unit (40) is a tunable dispersion compensation receiver, which can be an electric domain tunable dispersion compensation receiver, or an optical domain tunable dispersion compensation receiver, or the combination of the both.

6. The adaptive dispersion compensation system according to claim 1, wherein one of the at least one performance detecting unit (20), one of the at least one control processing unit (30) corresponding thereto, and one of the at least one dispersion adjusting unit (40) corresponding thereto are arranged respectively at different nodes, the detected information between the one performance detecting unit and the one control processing unit (30) is transmitted by the information transmission unit (50), and the control information between the one control processing unit (30) and the one dispersion adjusting unit (40) is transmitted by the information transmission unit (50).

7. The adaptive dispersion compensation system according to claim 1, wherein one of the at least one dispersion adjusting unit (40) and one of the at least one control processing unit (30) corresponding thereto are arranged at the same node, one of the at least one performance detecting unit (20) corresponding thereto is arranged at a different node, the detected information between the one performance detecting unit (20) and the one control processing unit (30) is transmitted by the information transmission unit (50), and the control information of the one control processing unit (30) is directly transmitted to the dispersion adjusting unit (40).

8. The adaptive dispersion compensation system according to claim 1, wherein one of the at least one performance detecting unit (20) and one of the at least one control processing unit (30) corresponding thereto are arranged at the same node, one of the at least one dispersion adjusting unit (40) corresponding thereto is arranged at a different node, the detected information of the one performance detecting unit (20) is directly transmitted to the one control processing unit (30), and the control information between the one control processing unit (30) and the one dispersion adjusting unit (40) is transmitted by the information transmission unit (50).

9. The adaptive dispersion compensation system according to claim 1, wherein a plurality of performance detecting units (20), a plurality of control processing units (30) corresponding thereto, and a plurality of dispersion adjusting units (40) corresponding thereto are respectively arranged at different nodes, the detected information between the plurality of performance detecting units (20) and the plurality of control processing units (30) corresponding respectively thereto is transmitted by the information transmission unit (50), the control information between the plurality of control processing units (30) and the plurality of dispersion adjusting units (40) corresponding respectively thereto is transmitted by the information transmission unit (50).

10. The adaptive dispersion compensation system according to claim 1, wherein a plurality of performance detecting units (20) and a plurality of dispersion adjusting units (40) corresponding thereto correspond to one of the at least one control processing unit (30) and are centralizilly controlled by the one control processing unit (30).

11. The adaptive dispersion compensation system according to any one of claims 1 to 10, wherein the information transmission unit (50) realizes in-band information transmission through the overhead inside the optical path to be compensated.

12. The adaptive dispersion compensation system according to any one of claims 1 to 10, wherein the information transmission unit (50) realizes information transmission through the public optical path irrelevant to the optical path which needs to be compensated.

13. The adaptive dispersion compensation system according to any one of claims 1 to 10, wherein the information transmission unit (50) realizes information transmission through the combination of the overhead inside the optical path which needs to be compensated and the public optical path irrelevant to the optical path which needs to be compensated.

14. The adaptive dispersion compensation system according to any one claims 1 to 10,wherein the detected information can be the dispersion change information of the optical path to be compensated over the whole optical transmission link.

15. The adaptive dispersion compensation system according to any one of claims 1 to 10, wherein the adaptive dispersion compensation system is adaptable to a single channel or a multichannel.

16. An adaptive dispersion compensation method for optical communication network, **characterized in that** the method comprises the following steps:

a detecting step for generating detected information through the detection of the dispersion relevant performances by means of at least one performance detecting unit (20);
a detected information transmission step for transmitting the detected information to at least one control processing unit (30);
a processing step for generating control information by means of the at least one control processing unit (30) according to the detected information;
a control information transmission step for transmitting the control information to at least one dispersion adjusting unit (40);
a compensation step for compensating the dispersion by means of the at least one dispersion adjusting unit (40) according to the control information.
wherein, at the detected information transmission step and the control information transmission step, the detected information are transmitted from the at least one performance detecting unit (20) to the at least one control processing unit (30) which is arranged at a different node, and the control information are transmitted from the at least one control processing unit (30) to the at least one dispersion adjusting unit (40) which is arranged at a different node, by means of an information transmission unit (50).

17. The adaptive dispersion compensation method according to claim 16, wherein at the compensation step, a tunable dispersion compensator can be used as the dispersion adjusting unit (40) to compensate the dispersion.

18. The adaptive dispersion compensation method according to claim 16, wherein at the detected information transmission step and the control information transmission step, the in-band information transmission is accomplished by means of the information transmission unit (50) using the overhead inside the optical path to be compensated.

19. The adaptive dispersion compensation method according to claim 16, wherein at the detected information transmission step and the control information transmission step, the information transmission unit (50) realizes information transmission through the public optical path irrelevant to the optical path to be compensated.

20. The adaptive dispersion compensation method according to claim 16, wherein at the detected information transmission step and the control information transmission step, the information transmission unit (50) realizes information transmission through the combination of the two paths: the overhead inside the optical path which needs to be compensated, and the public optical path irrelevant to the optical path which needs to be compensated.

21. The adaptive dispersion compensation method according to claim 16, wherein the detected information can be the dispersion change information of the optical path to be compensated over the whole optical transmission link.

22. The adaptive dispersion compensation method according to claim 16, wherein the detected information can be the signal bit error rate or signal Q factor or the information which reflects signal quality of the optical path to be compensated at the receiving side of the optical transmission link.

23. The adaptive dispersion compensation method according to claim 16, wherein the adaptive dispersion compensation method is suitable for the single channel system or the multichannel system.

## Patentansprüche

1. Selbstadaptives Dispersionskompensationssystem für optisches Kommunikationsnetzwerk, **dadurch gekennzeichnet, dass** das System Folgendes umfasst:

mindestens eine Leistungsdetektionseinheit (20) zum Detektieren einer dispersionsrelevanten Leistung;
mindestens eine Steuerverarbeitungseinheit (30) zum Erzeugen von Steuerinformation gemäß der detektierten Information von der mindestens einen Leistungsdetektionseinheit;
mindestens eine Dispersionsanpassungseinheit (40) zum Kompensieren von Dispersion gemäß der Steuerinformation von der mindestens einen Steuerverarbeitungseinheit; und
eine Informationsübertragungseinheit (50), verbunden zwischen der mindestens einen Leistungsdetektionseinheit, der mindestens einen Steuerverarbeitungseinheit und der mindestens einen Dispersionsanpassungseinheit, die an verschiedenen Knoten angeordnet sind, zum Übertragen der detektierten Information von der mindestens einen Leistungsdetektionseinheit zu der mindestens einen Steuerverarbeitungseinheit, angeordnet an einem anderen Knoten, und zum Übertragen der Steuerinformation von der mindestens einen Steuerverarbeitungseinheit zu der mindestens einen Dispersionsanpassungseinheit, angeordnet an einem anderen Knoten.

2. Adaptives Dispersionskompensationssystem nach Anspruch 1, wobei die mindestens eine Dispersionsanpassungseinheit (40) ein einstellbarer Dispersionskompensator ist, der das Chirped Fiber Bragg Grating verwendet, oder der die G-T-Interferenztechnologie verwendet, oder der mikroelektronische mechanische Systemtechnologie verwendet, oder der ein Gerät sein kann, das mehrstufige feste Dispersionskompensatoren in Kaskadenverbindung, sowie die Technologie, die verschiedene Dispersionskompensationswerte durch die Steuerung eines optischen Schalters verwendet.

3. Adaptives Dispersionskompensationssystem nach Anspruch 1, wobei die mindestens eine Dispersionsanpassungseinheit (40) ein Sender ist, der in der Lage ist, eine Dispersion aufzunehmen.

4. Adaptives Dispersionskompensationssystem nach Anspruch 1, wobei die mindestens eine Dispersionsanpassungseinheit (40) ein Empfänger ist, der in der Lage ist, eine Dispersion anzupassen.

5. Adaptives Dispersionskompensationssystem nach Anspruch 1, wobei die mindestens eine Dispersionsanpassungseinheit (40) ein einstellbarer Dispersionskompensationsempfänger ist, der ein einstellbarer Dispersionskompensationsempfänger einer elektrischen Domäne oder ein einstellbarer Dispersionskompensationsempfänger einer optischen Domäne oder die Kombination von beiden sein kann.

6. Adaptives Dispersionskompensationssystem nach Anspruch 1, wobei eine der mindestens einen Leistungsdetektionseinheit (20), eine der mindestens einen dazu passenden Steuerverarbeitungseinheit (30) und eine der mindestens einen dazu passenden Dispersionsanpassungseinheit (40) jeweils an verschiedenen Knoten angeordnet sind, die detektierte Information zwischen der einen Leistungsdetektionseinheit und der einen Steuerverarbeitungseinheit (30) durch die Informationsübertragungseinheit (50) übertragen wird und die Steuerinformation durch die Informationsübertragungseinheit (50) zwischen der einen Steuerverarbeitungseinheit (30) und der einen Dispersionsanpassungseinheit (40) übertragen wird.

7. Adaptives Dispersionskompensationssystem nach Anspruch 1, wobei eine der mindestens einen Dispersionsanpassungseinheit (40) und eine der mindestens einen dazu passenden Steuerverarbeitungseinheit (30) an demselben Knoten angeordnet sind, wobei eine der mindesten einen dazu passenden Leistungsdetektionseinheit (20) an einem anderen Knoten angeordnet ist, wobei die detektierte Information durch die Informationsübertragungseinheit (50) zwischen der einen Leistungsdetektionseinheit (20) und der einen Steuerverarbeitungseinheit (30) übertragen wird und wobei die Steuerinformation der einen Steuerverarbeitungseinheit (30) direkt an die Dispersionsanpassungseinheit (40) übertragen wird.

8. Adaptives Dispersionskompensationssystem nach Anspruch 1, wobei eine der mindestens einen Leistungsdetektionseinheit (20) und eine der mindestens einen dazu passenden Steuerverarbeitungseinheit (30) an demselben Knoten angeordnet sind, wobei eine der mindestens einen dazu passenden Dispersionsanpassungseinheit (40) an einem anderen Knoten angeordnet ist, wobei die detektierte Information der Leistungsdetektionseinheit (20) direkt an die eine Steuerverarbeitungseinheit (30) übertragen wird und wobei die Steuerinformation durch die Informationsübertragungseinheit (50) zwischen der einen Steuerverarbeitungseinheit (30) und der einen Dispersionsanpassungseinheit (40) übertragen wird.

9. Adaptives Dispersionskompensationssystem nach Anspruch 1, wobei mehrere Leistungsdetektionseinheiten (20), mehrere dazu passende Steuerverarbeitungseinheiten (30) und mehrere dazu passende Dispersionsanpassungseinheiten (40) jeweils an verschiedenen Knoten angeordnet sind, wobei die detektierte Information zwischen den mehreren Leistungsdetektionseinheiten (20) und den mehreren dazu passenden Steuerverarbeitungseinheiten (30) durch die Informationsübertragungseinheit (50) übertragen wird, wobei die Steuerinformation durch die Informationsübertragungseinheit (50) zwischen den mehreren Steuerverarbeitungseinheiten (30) und den mehreren dazu passenden Dispersionsanpassungseinheiten (40) übertragen wird.

10. Adaptives Dispersionskompensationssystem nach Anspruch 1, wobei mehrere Leistungsdetektionseinheiten (20) und mehrere dazu passende Dispersionsanpassungseinheiten (40) zu einer der mindestens einen Steuerverarbeitungseinheit (30) passen und zentral von der einen Steuerverarbeitungseinheit (30) gesteuert werden.

11. Adaptives Dispersionskompensationssystem nach einem der Ansprüche 1 bis 10, wobei die Informationsübertragungseinheit (50) die In-Band-Informationsübertragung durch den Overhead im zu kompensierenden optischen Weg realisiert.

12. Adaptives Dispersionskompensationssystem nach einem der Ansprüche 1 bis 10, wobei die Informationsübertragungseinheit (50) die Informationsübertragung über den öffentlichen optischen Weg, irrelevant für den optischen Weg, der kompensiert werden muss, realisiert.

13. Adaptives Dispersionskompensationssystem nach einem der Ansprüche 1 bis 10, wobei die Informationsübertragungseinheit (50) die Informationsübertragung durch die Kombination des Overheads im optischen Weg, der kompensiert werden muss, und dem öffentlichen optischen Weg, irrelevant für den optischen Weg, der kompensiert werden muss, realisiert.

14. Adaptives Dispersionskompensationssystem nach einem der Ansprüche 1 bis 10, wobei die detektierte Information die Dispersionsänderungsinformation des optischen Weges sein kann, zu kompensieren über die gesamte optische Übertragungsverbindung.

15. Adaptives Dispersionskompensationssystem nach einem der Ansprüche 1 bis 10, wobei das adaptive Dispersionskompensationssystem auf einen Einzelkanal oder einen Mehrkanal anpassbar ist.

16. Adaptives Dispersionskompensationsverfahren für ein optisches Kommunikationsnetzwerk, **dadurch gekennzeichnet, dass** das Verfahren folgende Schritte umfasst:

einen Detektionsschritt zum Erzeugen detektierter Information durch die Detektion der dispersionsrelevanten Leistungen mittels mindestens einer Leistungsdetektionseinheit (20);

einen Detektionsinformation-Übertragungsschritt zum Übertragen der detektierten Information an mindestens eine Steuerverarbeitungseinheit (30);

einen Verarbeitungsschritt zum Erzeugen von Steuerinformation mittels der mindestens einen Steuerverarbeitungseinheit (30) gemäß der detektierten Information;

einen Steuerinformation-Übertragungsschritt zum Übertragen der Steuerinformation an mindestens eine Dispersionsanpassungseinheit (40);

einen Kompensationsschritt zum Kompensieren der Dispersion mittels der mindestens einen Dispersionsanpassungseinheit (40) gemäß der Steuerinformation,

wobei beim Detektionsinformation-Übertragungsschritt und dem Steuerinformation-Übertragungsschritt die detektierte Information von der mindestens einen Leistungsdetektionseinheit (20) an die mindestens eine Steuerverarbeitungseinheit (30), die an einem anderen Knoten angeordnet ist, übertragen wird, und die Steuerinformation von der mindestens einen Steuerverarbeitungseinheit (30) an die mindestens eine Dispersionsanpassungseinheit (40), die an einem anderen Knoten angeordnet ist, übertragen wird, mittels einer Informationsübertragungseinheit (50).

17. Adaptives Dispersionskompensationsverfahren nach Anspruch 16, wobei beim Kompensationsschritt ein einstellbarer Dispersionskompensator als Dispersionsanpassungseinheit (40) verwendet werden kann, um die Dispersion zu kompensieren.

18. Adaptives Dispersionskompensationsverfahren nach Anspruch 16, wobei die In-Band-Informationsübertragung mittels der Informationsübertragungseinheit (50) beim Detektionsinformation-Anpassungsschritt und dem Steuerinformation-Anpassungsschritt unter Verwendung des Overheads im zu kompensierenden optischen Weg realisiert wird.

19. Adaptives Dispersionskompensationsverfahren nach Anspruch 16, wobei die Informationsübertragungseinheit (50) beim Detektionsinformation-Übertragungsschritt und dem Steuerinformation-Übertragungsschritt die Informationsübertragung über den öffentlichen optischen Weg, irrelevant für den zu kompensierenden optischen Weg, realisiert.

20. Adaptives Dispersionskompensationsverfahren nach Anspruch 16, wobei die Informationsübertragungseinheit (50) beim Detektionsinformation-Übertragungsschritt und dem Steuerinformation-Übertragungsschritt die Informationsübertragung durch die Kombination der zwei Wege realisiert: dem Overhead im optischen Weg, der kompensiert werden muss, und dem öffentlichen Weg, irrelevant für den optischen Weg, der kompensiert werden muss.

21. Adaptives Dispersionskompensationsverfahren nach Anspruch 16, wobei die detektierte Information die Dispersionsänderungsinformation des zu kompensierenden optischen Weges über die gesamte optische Übertragungsverbindung sein kann.

22. Adaptives Dispersionskompensationsverfahren nach Anspruch 16, wobei die detektierte Information die Signalbit-Fehlerrate oder der Signal-Q-Faktor oder die Information, welche die Signalqualität des zu kompensierenden optischen Weges an der Empfangsseite der optischen Übertragungsverbindung sein kann.

23. Adaptives Dispersionskompensationsverfahren nach Anspruch 16, wobei das adaptive Dispersionskompensationsverfahren für das Einzelkanalsystem oder das Mehrkanalsystem geeignet ist.

**Revendications**

1. Système de compensation de dispersion adaptative pour un réseau de communication optique, **caractérisé en ce que** le système comprend :

au moins une unité de détection de performance (20) pour détecter une performance en rapport avec la dispersion ;

au moins une unité de traitement de commande (30) pour générer des informations de commande en fonction des informations détectées de ladite au moins une unité de détection de performance ;

au moins une unité d'ajustement de dispersion (40) pour compenser une dispersion en fonction des informations de commande de ladite au moins une unité de traitement de commande ; et

une unité de transmission d'informations (50) connectée parmi ladite au moins une unité de détection de performance, ladite au moins une unité de traitement de commande et ladite au moins une unité d'ajustement de dispersion qui sont situées au niveau de différents noeuds, pour transmettre les informations détectées de ladite au moins une unité de détection de performance à ladite au moins une unité de traitement de commande située au niveau d'un noeud différent, et pour transmettre les informations de commande de ladite au moins une unité de traitement de commande à ladite au moins une unité d'ajustement de dispersion située au niveau d'un noeud différent.

2. Système de compensation de dispersion adaptative selon la revendication 1, dans lequel ladite au moins une unité d'ajustement de dispersion (40) est un compensateur de dispersion accordable qui peut être celui utilisant un réseau de Bragg sur fibre modulé, ou celui utilisant une technologie d'interférence à étalon G-T, ou celui utilisant une technologie de système mécanique microélectronique, ou celui utilisant une technologie de cavité résonante de forme annulaire PLC, ou le dispositif utilisant des compensateurs de dispersion fixes à étages multiples dans une connexion en cascade et également la technologie obtenant différentes valeurs de compensation de dispersion par la commande d'un commutateur optique.

3. Système de compensation de dispersion adaptative selon la revendication 1, dans lequel ladite au moins une unité d'ajustement de dispersion (40) est un émetteur capable de s'adapter à une dispersion.

4. Système de compensation de dispersion adaptative selon la revendication 1, dans lequel ladite au moins une unité d'ajustement de dispersion (40) est un récepteur capable d'ajuster une dispersion.

5. Système de compensation de dispersion adaptative selon la revendication 1, dans lequel ladite au moins une unité d'ajustement de dispersion (40) est un récepteur à compensation de dispersion accordable, qui peut être un récepteur à compensation de dispersion accordable dans le domaine électrique, ou un récepteur à compensation de dispersion accordable dans le domaine optique, ou la combinaison des deux.

6. Système de compensation de dispersion adaptative selon la revendication 1, dans lequel l'une de ladite au moins une unité de détection de performance (20), l'une de ladite au moins une unité de traitement de commande (30) correspondant à celle-ci, et l'une de ladite au moins une unité d'ajustement de dispersion (40) correspondant à celle-ci sont respectivement agencées au niveau de différents noeuds, les informations détectées entre ladite unité de détection de performance et ladite unité de traitement de commande (30) sont transmises par l'unité de transmission d'informations (50), et les informations de commande entre ladite unité de traitement de commande (30) et ladite unité d'ajustement de dispersion (40) sont transmises par l'unité de transmission d'informations (50).

7. Système de compensation de dispersion adaptative selon la revendication 1, dans lequel l'une de ladite au moins une unité d'ajustement de dispersion (40) et l'une de ladite au moins une unité de traitement de commande (30) correspondant à celle-ci sont agencées au niveau du même noeud, l'une de ladite au moins une unité de détection de performance (20) correspondant à celle-ci est agencée au niveau d'un noeud différent, les informations détectées entre ladite unité de détection de performance (20) et ladite unité de traitement de commande (30) sont transmises par l'unité de transmission d'informations (50), et les informations de commande de ladite unité de traitement de commande (30) sont directement transmises à l'unité d'ajustement de dispersion (40).

8. Système de compensation de dispersion adaptative selon la revendication 1, dans lequel l'une de ladite au moins une unité de détection de performance (20) et l'une de ladite au moins une unité de traitement de commande (30) correspondant à celle-ci sont agencées au niveau du même noeud, l'une de ladite au moins une unité d'ajustement de dispersion (40) correspondant à celle-ci est agencée au niveau d'un noeud différent, les informations détectées de ladite unité de détection de performance (20) sont directement transmises à ladite unité de traitement de commande (30), et les informations de commande entre ladite unité de traitement de commande (30) et ladite unité d'ajustement de dispersion (40) sont transmises par l'unité de transmission d'informations (50).

9. Système de compensation de dispersion adaptative selon la revendication 1, dans lequel une pluralité d'unités de détection de performance (20), une pluralité d'unités de traitement de commande (30) correspondant à celles-ci, et une pluralité d'unités d'ajustement de dispersion (40) correspondant à celles-ci sont respectivement agencées au niveau de différents noeuds, les informations détectées entre la pluralité d'unités de détection de performance (20) et la pluralité d'unités de traitement de commande (30) correspondant respectivement à celles-ci sont transmises par l'unité de transmission d'informations (50), les informations de commande entre la pluralité d'unités de traitement de commande (30) et la pluralité d'unités d'ajustement de dispersion (40) correspondant respectivement à celles-ci sont transmises par l'unité de transmission d'informations (50).

10. Système de compensation de dispersion adaptative selon la revendication 1, dans lequel une pluralité d'unités de détection de performance (20) et une pluralité d'unités d'ajustement de dispersion (40) correspondant à celles-ci correspondent à l'une de ladite au moins une unité de traitement de commande (30) et sont commandées de manière centralisée par ladite unité de traitement de commande (30).

11. Système de compensation de dispersion adaptative selon l'une quelconque des revendications 1 à 10, dans lequel l'unité de transmission d'informations (50) effectue une transmission d'informations dans la bande par l'intermédiaire du surdébit à l'intérieur du trajet optique à compenser.

12. Système de compensation de dispersion adaptative selon l'une quelconque des revendications 1 à 10, dans lequel l'unité de transmission d'informations (50) effectue une transmission d'informations par l'intermédiaire du trajet optique public qui est sans rapport avec le trajet optique qui doit être compensé.

13. Système de compensation de dispersion adaptative selon l'une quelconque des revendications 1 à 10, dans lequel l'unité de transmission d'informations (50) effectue une transmission d'informations par l'intermédiaire de la combinaison du surdébit à l'intérieur du trajet optique qui doit être compensé et du trajet optique public qui est sans rapport avec le trajet optique qui doit être compensé.

14. Système de compensation de dispersion adaptative selon l'une quelconque des revendications 1 à 10, dans lequel les informations détectées peuvent être des informations de changement de dispersion du trajet optique à compenser sur la liaison de transmission optique entière.

15. Système de compensation de dispersion adaptative selon l'une quelconque des revendications 1 à 10, dans lequel le système de compensation de dispersion adaptative peut être adapté à un canal unique ou à de multiples canaux.

16. Procédé de compensation de dispersion adaptative pour un réseau de communication optique, **caractérisé en ce que** le procédé comprend les étapes suivantes :

une étape de détection pour générer des informations détectées par la détection des performances en rapport avec une dispersion au moyen d'au moins une unité de détection de performance (20) ;
une étape de transmission d'informations détectées pour transmettre les informations détectées à au moins une unité de traitement de commande (30) ;
une étape de traitement pour générer des informations de commande au moyen de ladite au moins une unité de traitement de commande (30) en fonction des informations détectées ;
une étape de transmission d'informations de commande pour transmettre les informations de commande à au moins une unité d'ajustement de dispersion (40) ;
une étape de compensation pour compenser la dispersion au moyen de ladite au moins une unité d'ajustement de dispersion (40) en fonction des informations de commande,
dans lequel, à l'étape de transmission d'informations détectées et à l'étape de transmission d'informations de commande, les informations détectées sont transmises de ladite au moins une unité de détection de performance (20) à ladite au moins une unité de traitement de commande (30) qui est agencée au niveau d'un noeud différent, et les informations de commande sont transmises de ladite au moins une unité de traitement de commande (30) à ladite au moins une unité d'ajustement de dispersion (40) qui est agencée au niveau d'un noeud différent, au moyen d'une unité de transmission d'informations (50).

17. Procédé de compensation de dispersion adaptative selon la revendication 16, dans lequel, à l'étape de compensation, un compensateur de dispersion accordable peut être utilisé en tant qu'unité d'ajustement de dispersion (40) pour compenser la dispersion.

18. Procédé de compensation de dispersion adaptative selon la revendication 16, dans lequel, à l'étape de transmission d'informations détectées et à l'étape de transmission d'informations de commande, la transmission d'informations dans la bande est effectuée au moyen de l'unité de transmission d'informations (50) en utilisant le surdébit à l'intérieur du trajet optique à compenser.

19. Procédé de compensation de dispersion adaptative selon la revendication 16, dans lequel, à l'étape de transmission d'informations détectées et à l'étape de transmission d'informations de commande, l'unité de transmission d'informations (50) effectue une transmission d'informations par l'intermédiaire du trajet optique public qui est sans rapport avec le trajet optique à compenser.

**20.** Procédé de compensation de dispersion adaptative selon la revendication 16, dans lequel, à l'étape de transmission d'informations détectées et à l'étape de transmission d'informations de commande, l'unité de transmission d'informations (50) effectue une transmission d'informations par l'intermédiaire de la combinaison des deux trajets : le surdébit à l'intérieur du trajet optique qui doit être compensé et le trajet optique public qui est sans rapport avec le trajet optique qui doit être compensé.

**21.** Procédé de compensation de dispersion adaptative selon la revendication 16, dans lequel les informations détectées peuvent être les informations de changement de dispersion du trajet optique à compenser sur la liaison de transmission optique entière.

**22.** Procédé de compensation de dispersion adaptative selon la revendication 16, dans lequel les informations détectées peuvent être le taux d'erreurs sur les bits du signal ou le facteur Q du signal ou les informations qui reflètent une qualité de signal du trajet optique à compenser du côté de réception de la liaison de transmission optique.

**23.** Procédé de compensation de dispersion adaptative selon la revendication 16, dans lequel le procédé de compensation de dispersion adaptative est approprié pour le système à canal unique ou le système à canaux multiples.

**Fig. 1**

**Fig. 2**

**Fig. 3**

**Fig. 4**

**Fig. 5**

**Fig. 6**

Detecting dispersion relevant
performance and generating
detected information

↓

Transmitting the detected
information to the control
processing unit

↓

Generating control information
through the control processing
unit according to the detected
information

↓

Transmitting the control
information to the dispersion
adjusting unit

↓

Compensating dispersion
through the dispersion adjusting
unit according to the control
information

**Fig. 7**

Dispersion
adjusting unit

Information
transmission
system

Dispersion relevant
performance
detecting unit

Control
processing unit

**Fig. 8**

```
┌─────────────────┐      ╱───────────╲      ┌─────────────────┐
│   Dispersion    │     ╱ Information  ╲     │    Control      │
│ adjusting unit  │─────│ transmission  │────│ processing unit │
└─────────────────┘     ╲   system     ╱     └─────────────────┘
                         ╲─────────────╱              │
                                              ┌───────────────────┐
                                              │ Dispersion relevant│
                                              │    performance     │
                                              │  detecting unit    │
                                              └───────────────────┘
```

## Fig. 9

```
┌───────────────────┐                    ┌───────────────────┐
│ Dispersion relevant│                   │ Dispersion relevant│
│    performance     │                   │    performance     │
│ detecting unit A   │                   │ detecting unit B   │
└───────────────────┘                    └───────────────────┘
          ╲                                      ╱
┌───────────────┐        ╱───────────╲    ┌───────────────┐
│  Dispersion   │       ╱ Information  ╲   │  Dispersion   │
│adjusting unit A│──────│ transmission  │──│adjusting unit B│
└───────────────┘       ╲   system     ╱   └───────────────┘
          ╱              ╲─────────────╱          ╲
┌───────────────┐                         ┌───────────────┐
│    Control    │                         │    Control    │
│processing unit A│                       │processing unit B│
└───────────────┘                         └───────────────┘
```

## Fig. 10

```
┌───────────────┐                         ┌───────────────────┐
│  Dispersion   │                         │ Dispersion relevant│
│adjusting unit A│                        │    performance     │
└───────────────┘                         │ detecting unit A   │
          ╲                               └───────────────────┘
┌───────────────┐                         ┌───────────────────┐
│  Dispersion   │       ╱───────────╲     │ Dispersion relevant│
│adjusting unit B│──────│ Information ├────│    performance     │
└───────────────┘       │transmission │   │ detecting unit B   │
          ╱             │   system    │   └───────────────────┘
┌───────────────┐       ╲─────────────╱   ┌───────────────────┐
│  Dispersion   │              │           │ Dispersion relevant│
│adjusting unit C│             │           │    performance     │
└───────────────┘             │           │ detecting unit C   │
                    ┌──────────────────┐  └───────────────────┘
                    │Control processing│
                    │   center unit    │
                    └──────────────────┘
```

## Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004004171 A1
- EP 1628417 A